(19) Europäisches Patentamt
European Patent Office
Office européen des brevets

(11) **EP 4 109 377 A1**

(12) **EUROPEAN PATENT APPLICATION**

(43) Date of publication:
**28.12.2022 Bulletin 2022/52**

(21) Application number: **22180436.2**

(22) Date of filing: **22.06.2022**

(51) International Patent Classification (IPC):
***G06Q 40/02*** *(2012.01)*     ***G06Q 40/06*** *(2012.01)*

(52) Cooperative Patent Classification (CPC):
**G06Q 40/02; G06Q 40/025; G06Q 40/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.06.2021 US 202117355725**

(71) Applicant: **Affirm, Inc.**
**San Francisco, CA 94108 (US)**

(72) Inventors:
• **SINGLA, Anibhav**
  **San Francisco,, 94108 (US)**
• **BENSON, Lee**
  **San Francisco, 94108 (US)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(54) **SYSTEM, METHOD AND APPARATUS FOR MODELING LOAN TRANSITIONS**

(57) A method for modeling loan transitions may include defining a plurality of potential repayment states of an individual loan between origination and a terminal state comprising either a paid off state or a charged off state, where the potential repayment states include a current state, a plurality of delinquency states distinguished from each other based on length of delinquency, the paid off state and the charged off state. The method may further include defining valid transitions between a present state among the potential repayment states and each respective one of the potential repayment states that is a possible next state from the present state, and determining, for the individual loan, a probability of transitioning from the present state to the next state during each period of a term of the individual loan.

FIG. 1

EP 4 109 377 A1

**Description**

TECHNICAL FIELD

Example embodiments generally relate to financial industry technologies and, in particular, relate to apparatuses, systems, and methods for modeling loan transitions.

BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions. More recently, buy now, pay later financing has become a popular option.

In many of the cases above, a customer may apply for credit via an online system that intakes certain information, and then makes determinations regarding whether (and in some cases how) to extend credit to the customer. The application process is typically automated in some form in terms of gathering required information, making any needed checks or confirmations (e.g., regarding identity verification, account verification, creditworthiness, etc.), making a decision on the application, and distribution of funds or advancing a line of credit. The automation of the process necessarily involves the employment of algorithms and policies that can often be executed via software programming.

Keeping a credit network running sustainably often depends on the ability of a company to accurately estimate the performance of outstanding loans. Measuring loan performance can be done in a number of different ways including estimating how much is expected to be lost via charge offs (i.e., failure to repay all or part of a loan), estimating how quickly a loan will be repaid, estimating monthly cash flow for a given set of loans, etc. Accurate estimation of these values may clearly be useful for a wide variety of analyses and applications.

BRIEF SUMMARY OF SOME EXAMPLES

Accordingly, some example embodiments may enable the provision of technical means by which to more accurately model loan repayment behavior and cash flow.

In an example embodiment, a method for modeling loan transitions is provided. The method may include defining a plurality of potential repayment states of an individual loan between origination and a terminal state comprising either a paid off state or a charged off state, where the potential repayment states include a current state, a plurality of delinquency states distinguished from each other based on length of delinquency, the paid off state and the charged off state. The method may further include defining valid transitions between a present state among the potential repayment states and each respective one of the potential repayment states that is a possible next state from the present state, and determining, for the individual loan, a probability of transitioning from the present state to the next state during each period of a term of the individual loan.

In another example embodiment, an apparatus for modeling loan transitions is provided. The apparatus may include a repayment module. The repayment module may define a plurality of potential repayment states of an individual loan between origination and a terminal state that includes either a paid off state or a charged off state, the potential repayment states including a current state, a plurality of delinquency states distinguished from each other based on length of delinquency, the paid off state and the charged off state. The repayment module may further define valid transitions between a present state among the potential repayment states and each respective one of the potential repayment states that is a possible next state from the present state. The repayment module may also determine, for the individual loan, a probability of transitioning from the present state to the next state during each period of a term of the individual loan.

In still another example embodiment, an apparatus for modeling loan transitions and cash flow is provided. The apparatus may include processing circuitry configured to employ a repayment model to predict state transition probabilities for a given loan at a given age, where the state transition probabilities represent a probability of transitioning from a present state to a next state among a plurality of potential repayment states of the given loan between origination and a terminal state. The processing circuitry may be further configured to compute cash flow based on the predicted state transition probabilities at any of a plurality of time steps in the future for the given loan.

BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

FIG. 1 illustrates a functional block diagram of a system for modeling future states of financial transactions according to an example embodiment;

FIG. 2 illustrates a functional block diagram of a repayment module according to an example embodiment;

FIG. 3 illustrates a block diagram showing a state diagram in accordance with an example embodiment;

FIG. 4 illustrates a table showing states of a sample loan at various time periods during the term of the sample loan in accordance with an example embodiment;

FIG. 5 illustrates a transition matrix in accordance with an example embodiment;

FIG. 6 illustrates a table of a dataset for a loan state chain for the sample loan of FIG. 4 in accordance with an example embodiment;

FIG. 7 illustrates a functional block diagram of a cash flow module according to an example embodiment;

FIG. 8 illustrates a probability-weighted principal balance vector in accordance with an example embodiment;

FIG. 9 illustrates multiplication of the transition matrix of FIG. 5 by an initial probability-weighted principal balance vector in accordance with an example embodiment;

FIG. 10 illustrates the use of an amortization matrix to adjust probability-weighted principal balances for payments in accordance with an example embodiment;

FIG. 11 illustrates a second iteration of the process shown in FIG. 10 in accordance with an example embodiment; and

FIG. 12 illustrates a block diagram of a method of modeling transactions to determine cash flow in accordance with an example embodiment.

DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a loan transition model platform that can be instantiated at an apparatus comprising configurable processing circuitry. The processing circuitry may be configured to execute various processing functions on financial data using the techniques described herein. The loan transition model platform may, for example, be configured to provide a way to understand, on a loan-by-loan basis, the probability of transitioning into any of various states from a current state. The states may correspond to a likelihood of repayment for the organization, and may also account for the timing of such repayment. Thus, example embodiments may not only enable the modeling of specific loans and the transitions such loans encounter, but also enable (e.g., when aggregated) the organization to better plan future cash flow.

Example embodiments may be employed in multiple contexts, which may include underwriting decisions and modeling of future cash flow for budgeting purposes. In relation to underwriting decisions, macroeconomic conditions and seasonality may have an impact on the business of a financial institution or organization. In response to these factors, it may be desirable to tune the variables of an underwriting system to ensure that risk is being sustainably managed. Loss estimates play a crucial role in predicting the impact of underwriting system changes before it is possible to actually observe the performance on newly originated loans. In the past, estimating losses has been attempted by using historical data. By employing an example embodiment, more accurate loss estimates may be provided to enable the underwriting system to make more informed decisions without waiting to observe actual performance, and generating models based only on past performance.

For financial planning and budgeting, a finance team at a financial institution or organization would prefer to have the most accurate possible view of the amount of money that will be received in any given month. In other words, the finance team would like to have a very accurate picture of future cash flow. In order to accomplish this, the finance team typically predicts month-by-month cash flow over an entire portfolio of loans looking at intervals of a month, quarter or year in advance. The prediction, as noted above, is again based on historical information, and lumps all loans of a particular type together.

Accordingly, answering a question as to what the organization can expect in terms of repayment of loans and cash flow over a future period of time has neither been easy nor very accurate. Prediction efforts have typically modeled the month-by-month pre-payment (loans being repaid early) and losses based on historical data. For large portfolios, which include different products that vary by various factors including credit tiers, interest rate ranges, term lengths, determining accurate information can be even more difficult. In this regard, not only is there a reliance on historical data, but loans in each factor-based group listed above are typically considered to be homogeneous. As such, reliance on historical data is not the only impediment to accuracy since conventional methods also suffer from employing models that are limited to a finite set of stratifications. Thus, modeling shared properties between different slices is also not possible.

Example embodiments may therefore employ a loan transition model (e.g., the loan transition model platform noted above) that can work in tandem with a cash flow engine to determine what expected repayment and cash flow are on an individual loan basis. The data associated with each individual loan can then be aggregated within a sector or for a set of loans. Thus, a more accurate and specific estimate regarding repayment and cash flow for any selected set of loans can be determined.

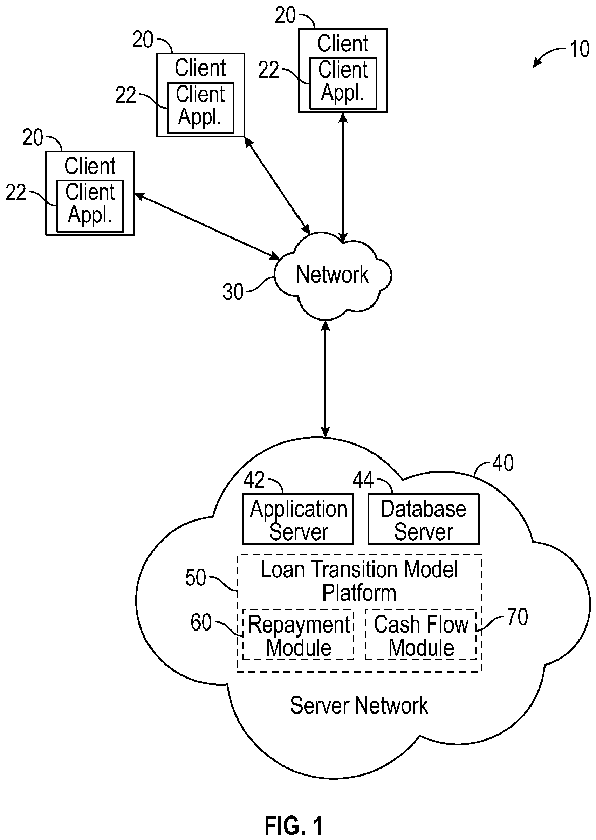

An example embodiment of the invention will now be described in reference to FIG. 1, which illustrates an example system in which an embodiment of the present invention may be employed. As shown in FIG. 1, a cash flow and loan transition management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a financial company) and may be located in different business units, branch offices, or other locations. In general, the clients 20 may be terminals or platform entities that are capable of executing example embodiments, and there could be as few as one, or a host of such terminals or entities. Moreover, in some cases, distributed computations, calculations, decisions, etc., may be made at respective ones of the clients 20.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for modeling, sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to loan transition model platform 50, and more particularly relating to facilitating financial computations and calculations related to modeling of cash flow and repayment of loans where, for example, the loans may include a buy now, pay later loan, or other products associated with credit or lending transactions. For example, the application server 42 may be configured to provide (via the loan transition model platform 50) execution of instructions, and storage of information descriptive of events or activities, associated with the loan transition model platform 50 and the execution of a financial computations, calculations and modeling on behalf of a user of the system 10 located at one of the clients 20 in real time. In some cases, the financial transaction may include obtaining buy now, pay later financing, and the activities associated therewith may include the provision of a loan/product application detailing information required by the lender (and operator of the loan transition model platform 50) to determine whether credit, funds, or other products can be provided to the customer based on information provided in the loan/product application. However, example embodiments may also apply to other types of loans.

In some embodiments, the loan transition model platform 50 may be a technical device, component or module affiliated with the lender or an agent of the lender. Thus, the loan transition model platform 50 may operate under control of the lender or agent of the lender to be a technical means by which to carry out activities under direction of the lender/agent or employees thereof. As such, in some embodiments, the clients 20 may access the loan transition model platform 50 services, and more particularly contact the loan transition model platform 50 online and utilize the services provided thereby. However, it should be appreciated that in other embodiments, an application (e.g., the client application 22) enabling the clients 20 to interact with the loan transition model platform 50 (or components thereof) may be provided from the application server 42 (e.g., via download over the network 30) to one or more of the clients 20 to enable recipient clients 20 to instantiate an instance of the client application 22 for local operation such that the loan transition model platform 50 may be a distributor of software enabling individual users to utilize the loan transition model platform 50. Alternatively, another distributor of the software may provide the client 20 with the client application 22, and the loan transition model platform 50 may communicate with the client 20 (via the client application 22) after such download.

In an example embodiment, the client application 22 may therefore include application programming interfaces (APIs) and other web interfaces to enable the client 20 to conduct operations as described herein via the loan transition model platform 50. The client application 22 may include a series of control consoles or web pages including a landing page, onboarding services, activity feed, account settings (e.g., user profile information), transaction management services, payment management services and the like in cooperation with a service application that may be executed at the loan transition model platform 50. Thus, for example, the client application 22 may enable the user or operator to articulate and submit queries, run modeling algorithms, execute budgeting functions, and/or the like using the loan transition model platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the loan transition model platform 50 configured to operate in accordance with an example embodiment of the present invention. In this regard, for example, the loan transition model platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the loan transition model platform 50. Thus, it should be appreciated that the functions of the loan transition model platform 50 can be conducted via client-server based interactions involving communications between clients 20 and the server network 40, or may be conducted locally at one of the clients 20 after an instance of the loan transition model platform 50 is downloaded (e.g., via or as the client application 22) locally at the corresponding one of the clients 20.

As such, the environment of FIG. 1 illustrates an example in which provision of content and information associated with the financial industry may be accomplished by a particular entity (namely the loan transition model platform 50 residing at the application server 42 or at one of the clients 20). Thus, the loan transition model platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the loan transition model platform 50 may operate to enable the user associated with a given one of the clients 20 to select groups of loans or other financial transactions to run modeling calculations on in association with the loan transition model platform 50. In some example embodiments, the client application 22 may be used in connection with running queries, models, or calculations that are then used as the basis for interactions between the customer and the lender/agent, or between decision makers within the organization in relation to services provided to customers, or policy decisions and budgeting that is to be done by the organization under control of the loan transition model platform 50. In this regard, for example, the client application 22 may be used to engage (e.g., via a website and corresponding APIs) with the loan transition model platform 50 to select individual products, loans, or types of loans to be evaluated using services associated with the loan transition model platform 50. The loan transition model platform 50 may prompt the client 20 to provide product or loan details, or other information associated with the financial transaction that is being evaluated. In other words, the client 20 may provide a user interface function for interacting with the loan transition model platform 50 to identify the information that will be evaluated using the loan transition model platform 50.

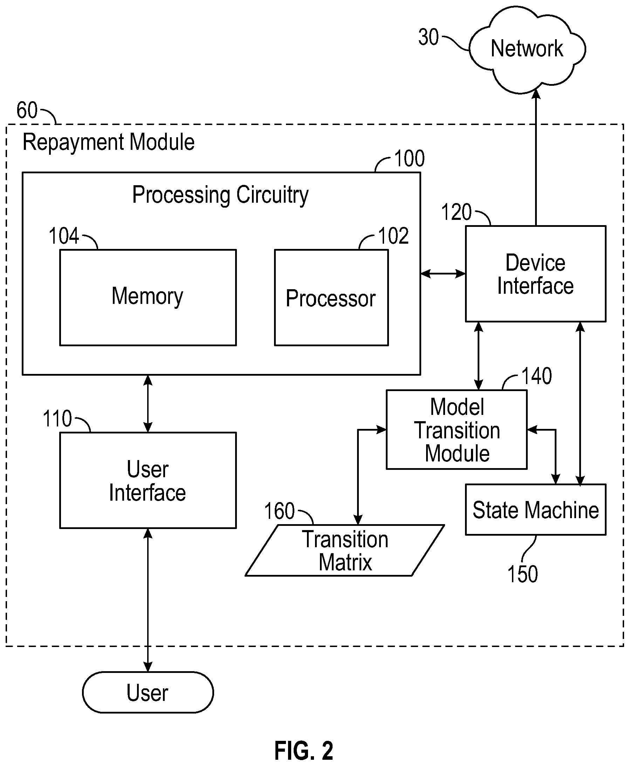

Regardless of how the queries, calculations or modeling activities are initiated, the loan transition model platform 50 of FIG. 1 may be used to manage execution of such activities. Each of these activities may have its own respective timing and calculations and communications that are facilitated by the loan transition model platform 50 and various components of the loan transition model platform 50 may be conducted in parallel. The components, which may be functional modules that operate via API or function calls to respective segmented platforms or a monolith or other collection of rules, policies, instructions, or the like. In an example embodiment, the loan transition model platform 50 may include one or both of a repayment module 60 and a cash flow module 70. The repayment module 60 may itself include various sub-modules or components (some of which are shown in greater detail in FIG. 2) that may be used to manage control flows associated with modeling state transitions for individual loans and/or aggregating model outputs for a plurality of loans associated with a given product or of a selected type in accordance with an example embodiment. Some of the structures associated with the repayment module 60 of an example embodiment will be described in reference to FIG. 2.

FIG. 2 shows certain elements of an apparatus for provision of the repayment module 60 or other processing circuitry according to an example embodiment. The apparatus of FIG. 2 may be employed, for example, as the repayment module 60 itself operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42 or the client 20) or by devices in a client/server relationship (e.g., the application server 42 and one or more clients 20). Thus, although FIG. 2 illustrates the repayment module 60 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating modeling of loan repayment transitions for loans on an individual basis is shown. In this regard, the repayment module 60 may be configured to perform analysis, modeling, or other determinations based on the signaling and/or the information provided to determine how likely the corresponding financial transaction or loan is to transition to a particular next state based on the current state. The apparatus may be an embodiment of the repayment module 60 or a device of the loan transition model platform hosting the repayment module 60. As such, configuration of the apparatus as described herein may transform the apparatus into the repayment module 60. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU). In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the repayment module 60, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the repayment module 60 as described below.

The repayment module 60 may be configured to include tools to facilitate the selection of individual loans or groups of loans (e.g., by product, loan type, or any other grouping) for which loan repayment probability information is desirable, and tools for the calculation of such probabilities. The tools may be provided in the form of various modules (or submodules) that may be instantiated by configuration of the processing circuitry 100. FIG. 2 illustrates some examples of modules that may be included in the repayment module 60 and that may be individually configured to perform one or more of the individual tasks or functions generally attributable to the repayment module 60 according to an example embodiment. However, the repayment module 60 need not necessarily be modular. In cases where the repayment module 60 employs modules, the modules may, for example, be configured to perform the tasks and functions described herein. In some embodiments, the repayment module 60 and/or any components, modules or sub-modules comprising the repayment module 60 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the repayment module 60 and/or any modules thereof, as described herein.

As shown in FIG. 2, the repayment module 60 may include submodules such as a model transition module 140 and a state machine 150. The operation of the model transition module and the state machine 150 may effectively execute a model for determining state transitioning probabilities as described below. Each such submodule may be associated with specific functions or functionality for which the corresponding module has been configured (e.g., by a combination of hardware and/or software). However, as noted above, it should be appreciated that such functions need not necessarily be segmented into specific or separate modules, and code, instructions, or functional elements of any or all of the submodules could be shared or collocated in various examples. Nevertheless, the descriptions that follow, which divide the functions into respective component submodules are provided for illustrating a convenient or possible way to instantiate one example embodiment.

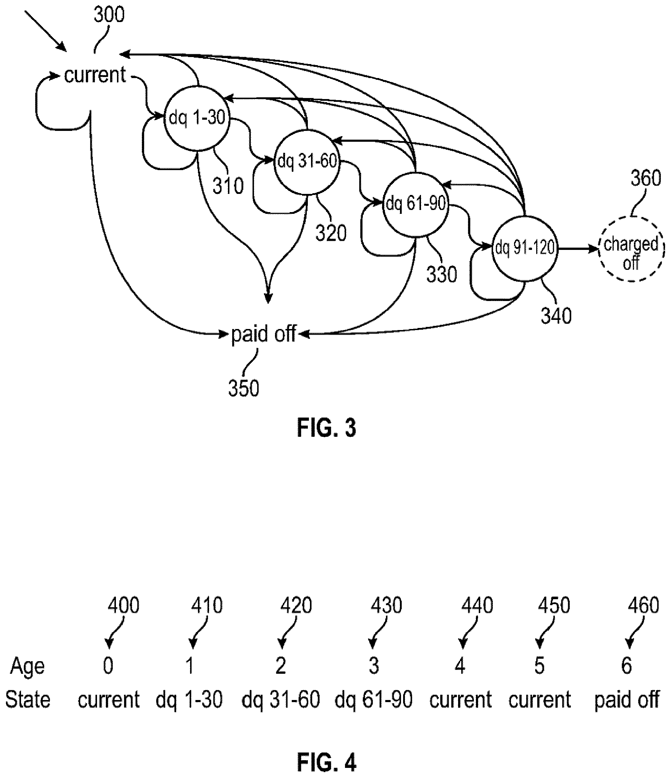

The model transition module 140 may be configured to enable selection of a loan or loans to evaluate, and may further process data associated with the loan or loans selected through the state machine 150 for generation of a transition matrix 160. Regardless of whether a single loan is selected for processing, or whether many loans are selected, each loan may be individually processed using the state machine 150 (either in series or in parallel). FIG. 3 illustrates a diagram of the various states of the state machine 150 of an example embodiment.

In this regard, FIG. 3 shows all possible states in which the loan could ever be during the repayment lifecycle of the loan, and further shows possible linking connections or flows therebetween. From the time the loan is initially obtained (i.e., on the day of loan origination), the loan is subject to a repayment schedule (which is defined by a repayment cycle that may run in increments of weeks, bi-weeks, months, bi-months, etc.). How the borrower (or customer) behaves relative to the repayment schedule during the period of time the loan is being repaid according to the repayment schedule (e.g., within each month after origination of the loan) dictates the status of the loan in that time period (e.g., month). Moreover, the state at the present time (i.e., the present state) dictates which possible next states could be encountered. The list of possible states according to an example embodiment include a current state 300, a first delinquency state 310, a second delinquency state 320, a third delinquency state 330, a fourth delinquency state 340, a paid off state 350, and a charged off state 360. Within these states, terms are defined as follows:

* "current" - The customer has made all payments that are required for this stage in the life of the loan

* "dq ($n$-$m$)" - The customer has missed a payment and is $n$ to $m$ days late on the payment. Thus, for example, dq 1-30 means the customer has missed a payment in the last 1 to 30 days, dq 31-60 means the user has missed a payment in the last 31 to 60 days, dq 61-90 means the customer has missed a payment in the last 61 to 90 days, and dq 91-120 means the customer has missed a payment in the last 91 to 120 days. However, it should be appreciated that other options for time periods and the number of delinquency states (i.e., dq ($n$-$m$) states) may vary in different embodiments.

* "charged off" - The customer is more than 120 days late on a payment, and it is assumed that the remaining balance on the loan is a loss since it cannot be reasonably expected that the customer will make further payments or pay off the loan. This is a terminal state.

* "paid off" - The loan is fully paid off and no more payments are required. This is a terminal state.

As shown by FIG. 3, if a loan is presently in the current state 300, the loan can only transition into one of three possible "next" states including a repeat of the current state 300, the first delinquency state 310 (i.e., dq 1-30 state), or the paid off state 350. If a loan is presently in the first delinquency state 310, the loan can only transition into one of four possible "next" states including staying in the first delinquency state 310, returning to the current state 300, transitioning to the second delinquency state 320 (i.e., dq 31-60 state), or transitioning to the paid off state 350. If a loan is presently in the second delinquency state 320, the loan can only transition into one of five possible "next" states including staying in the second delinquency state 320, transitioning to the first delinquency state 310 (e.g., if an earlier due payment is made), returning to the current state 300 (e.g., if all payments due to date have been made), transitioning to the third delinquency state 330 (i.e., dq 61-90 state), or transitioning to the paid off state 350. If a loan is presently in the third delinquency state 320, the loan can only transition into one of six possible "next" states including staying in the third delinquency state 330, transitioning to the first or second delinquency states 310 or 320 (e.g., if an earlier due payment is made), returning to the current state 300 (e.g., if all payments due to date have been made), transitioning to the fourth delinquency state 340 (i.e., dq 91-120 state), or transitioning to the paid off state 350. Finally, if a loan is presently in the fourth delinquency state 340, the loan can transition into one of all seven possible "next" states including staying in the fourth delinquency state 340, transitioning to the first, second or third delinquency states 310, 320 or 330 (e.g., if an earlier due payment is made), returning to the current state 300 (e.g., if all payments due to date have been made), transitioning to the third delinquency state 330 (i.e., dq 61-90 state), transitioning to the paid off state 350, or transitioning to the charged off state 360. The general limitation on "next" states for each current state can, in reality, be violated from time to time (albeit relatively infrequently). In this regard, due to the way payments are processed in actual fact, there may be situations where a jump state can occur. However, the relative infrequency of these events generally means that there is not a large impact on the prediction capabilities of the modeling described herein.

Given the relationships of the states shown in FIG. 3, the Markov property holds true for the state machine 150. As such, the probability of transitioning to different states in the future only depends on the current state, and not the sequence of states that preceded it. Using this property, and corresponding assumption, the modeling executed by the repayment module 60 can predict each next state independently of any previous states prior to the present state. Accordingly, the repayment module 60 can predict the state transition probabilities for a given loan age (e.g., number of months since origination).

FIG. 4 illustrates an example of state transitions that may occur for a six month loan through the state machine 150 of FIG. 3. In this regard, in period one 400, the first month after loan origination, the loan is considered current. However, the customer failed to make the first scheduled monthly payment. Thus, in period two 410, the state of the loan transitions to the first delinquency state. Similarly, the second scheduled monthly payment is missed, and therefore the loan transitions to the second delinquency state in period three 420. In period four 430, the customer has missed yet another monthly payment, so the loan transitions to the third delinquency state. In period five 440, however, the customer has not only made the monthly payment, but has made the previously missed three payments as well, thereby transitioning the loan back to a current state. By making the next payment also in period six 450, the loan stays current, and then by making the last payment in period seven 460, the loan transitions to the terminal state of "paid off." This is just one example, and many other possible transitions (albeit limited by the possible state transitions that are permitted in the state machine 150) are also possible.

As noted above, the model transition module 140 processes data associated with a selected loan or loans through the state machine 150 for generation of the transition matrix 160 thereby effectively applying a model to the loan data submitted to the model transition module 140 for analysis. As such, the model transition module 140 may employ features that act as inputs to the model, and such features may be categorized as either contextual or covariate. Contextual features, c, describe the loan itself. Thus, the contextual features may include signals such as a credit score assigned to the loan, the loan amount and the term or length of the loan. Covariate features may vary from transition to transition, and are meant to describe the state of the loan at each month. The main covariate features may be the loan state, s, and the age, t. The model transition module 140 outputs the probability of the state, s', at time $t' = t +1$, being each of the seven possible loan states. More formally, the model transition module 140 attempts to predict the probability shown below in Equation 1.

$$P(s' = S \mid c \cap s \cap t) \text{ for } S \text{ in } \{cur, dq1, dq31, dq61, dq91, co, po\} \qquad \text{Equation 1}$$

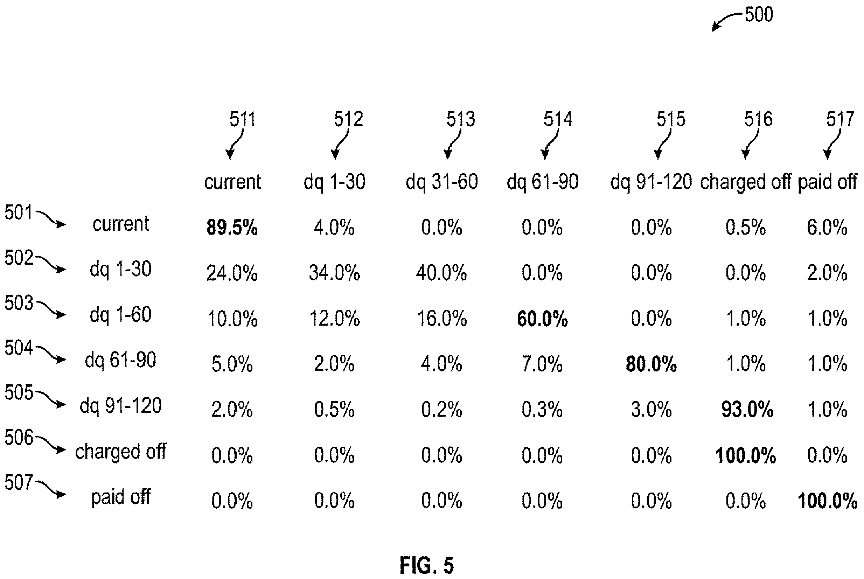

For each possible age the loan could have, the model transition module 140 may generate the transition matrix 160. Thus, the transition matrix 160 may show the probability of transitioning to each possible next state for the present state. The probabilities themselves may be learned (e.g., via machine learning) using a training data set. FIG. 5 illustrates an example transition matrix 500 for a sample loan over the entire life (e.g., six months) of the sample loan. However, it should be appreciated that modeling may be continued past the term of the loan to account for delays prior to charge off that extend beyond the original term of the loan. The model may therefore extend at least as long as the number of possible delinquency states leading to a charge off. Therefore, for the examples associated with FIG. 3, the model may extend the transition matrix 500 to the life of the loan (e.g., six months) plus the number of delinquency states (e.g., four).

Referring now to FIG. 5, each of the rows of the transition matrix 500 defines the present state (i.e., state at time t). Each of the columns of the transition matrix 500 defines a next state (i.e., state at time $t'= t+1$). Thus, row one 501 represents a present state of current. Meanwhile, row two 502, row three 503, row four 504 and row five 505 each represent a present state as being a first delinquency state, a second delinquency state, a third delinquency state, and a fourth delinquency state, respectively. Finally, row six 506 represents a present state of charged off, and row seven 507 represents a present state of paid off. Similarly, column one 511 represents a next state of current. Meanwhile, column two 512, column three 513, column four 514 and column five 515 each represent a next state as being a first delinquency state, a second delinquency state, a third delinquency state, and a fourth delinquency state, respectively. Finally, column six 516 represents a present next of charged off, and column seven 517 represents a next state of paid off.

Referring to the transition matrix 500 of FIG. 5, if at time t, the loan is in the current state, then this example model predicts that the loan will stay current at time $t+1$ with a probability of 89.5%. It is 4% likely that the loan will transition to the first delinquency state, 0.5% likely that the loan will be charged off, and 6% likely that the loan will be paid off. Meanwhile, since charged off and paid off are terminal states, the probability of staying in either one of them in the next state when charged off or paid off represent the present state is 100%. Accordingly, the transition matrix 500 represents the results of a gradient boosted decision tree, and the model itself is a gradient boosted decision tree that is trained to minimize cross-entropy, or multi-class log loss, where each class represents one of the possible loan states. This loss function may be chosen to enable interpretation of the output of the model as a probability distribution over the possible destination loan states, as seen in the transition matrix 500.

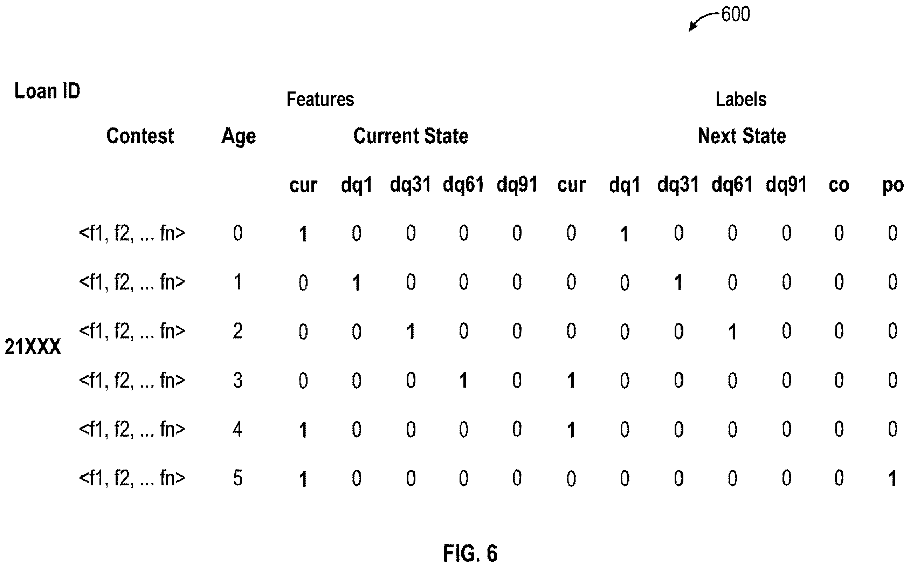

In this example, a dataset used to train the model may have one row per observed month for each loan. The rows for a single example loan are shown in table 600 in FIG. 6. Thus, the data set includes labels for each next state (i.e., seven possible next states), and features associated with the five possible present states (shown as "current state" in FIG. 6), and age and context information. Although table 600 shows one loan, it should be appreciated that the dataset includes many loans. Thus, by considering the dataset for all of the many loans therein, the probabilities for each possible transition can be determined, and implemented in connection with making the transition matrix 500 that applies to each individual one of the loans (i.e., based on the contextual and covariate features associated therewith).

As can be appreciated from the description above, the repayment module 60 may determine how likely it is for each individual loan in a set of selected loans to transition to each of its possible next states based on its present state. Effectively, the repayment module 60 determines a set of transition probabilities for each and every loan in the set of selected loans. Having this information, it may next be desirable to convert the transition probabilities into cash flow predictions. The cash flow module 70 may be configured to perform such conversions.

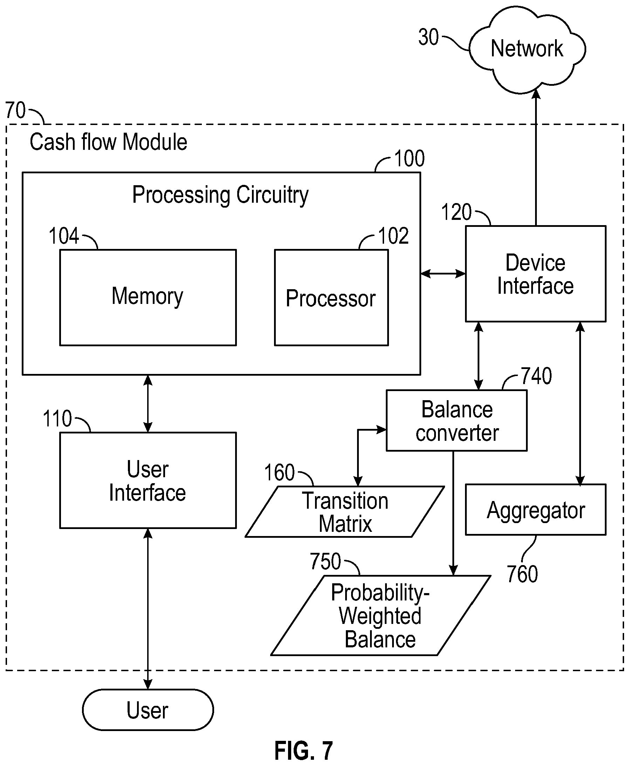

FIG. 7 illustrates a block diagram of the cash flow module 70 of an example embodiment. As shown in FIG. 7, the cash flow module 70 may, in some cases, include instances of processing circuitry 100, a user interface 110 and device interface 120 that may be similar to (or the same hardware as) components described above in reference to FIG. 2. Thus, a repeat of the descriptions of these components will not be provided here. However, the cash flow module 70 may also include a balance converter 740. The balance converter 740 may be configured to take the transition matrix 160 generated by the repayment module 60 and generate probability-weighted principal balance information 750 for various periods into the future.

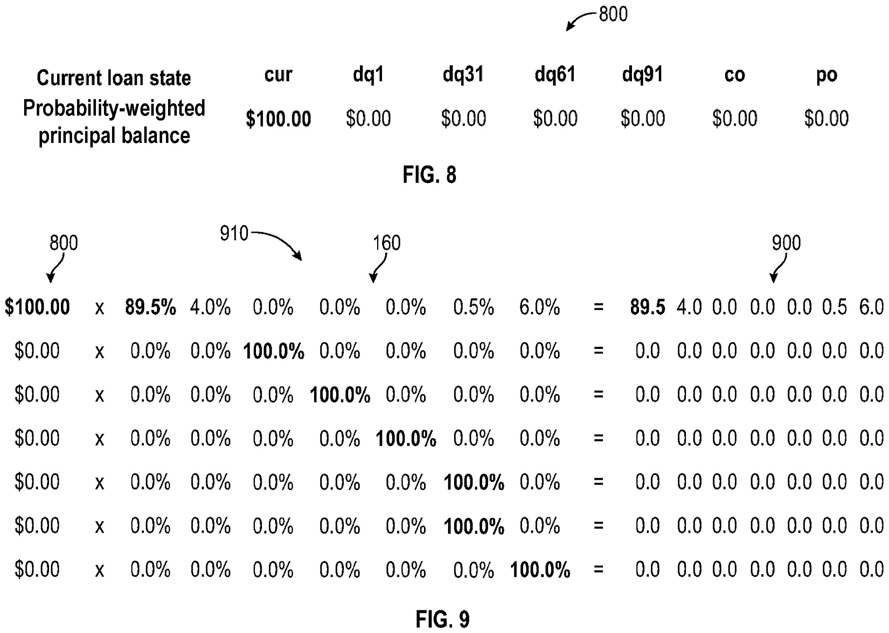

In this regard, for example, when the transition matrix 160 is generated for a given loan, the cash flow module 70 may be employed to compute different monthly or overall estimates for the loan. These computations may result in the provision of information such as interest paid, principal paid, principal prepayments, and principal charged off. To accomplish this, the balance converter 740 may be configured to iteratively apply the transition matrix 160 for the loan (and/or transition matrices for multiple other loans) to compute a month-over-month probability-weighted set of principal balances. As an example, assume a loan of $100, with 0% interest, and a three month term. FIG. 8 illustrates a probability-weighted principal balance vector 800 for t=0. The balance converter 740 multiplies the probability-weighted principal balance vector 800 row-wise by the transition matrix 160 for the transition $t=1$ to determine a balance matrix 900 shown in the table 910 of FIG. 9. The balance matrix 900 specifies how much probability-weighted principal will transition from each previous state to each next state. For example, $89.50 transitions from "current" to "current," representing a customer making a payment, and $4.00 transitioning from "current" to "dq 1-30," representing the customer missing a payment.

The next step is to determine how much principal will remain after each of the state transitions occurs. For example, if transitioning from "current" to "current," that means that the customer has made a payment for the corresponding month. In this example, the payment may be $33.33 (i.e., 1/3 of $100 for this 3 month loan). Thus, the amount of principal that will be left to repay after this transition is 0.6667 (or 66.67%) of the existing balance. For the transition of "current" to "dq 1-30," no payment is made. Thus, 1.0 (or 100%) of the existing balance is remaining principal. The principal balance transitions may be captured in an amortization matrix 1000, which may be computed by the balance converter 740.

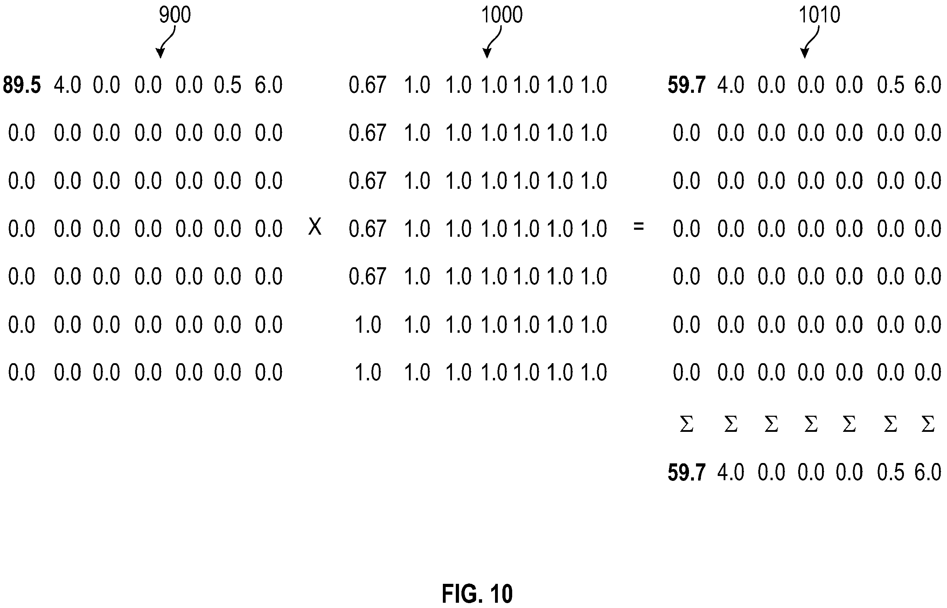

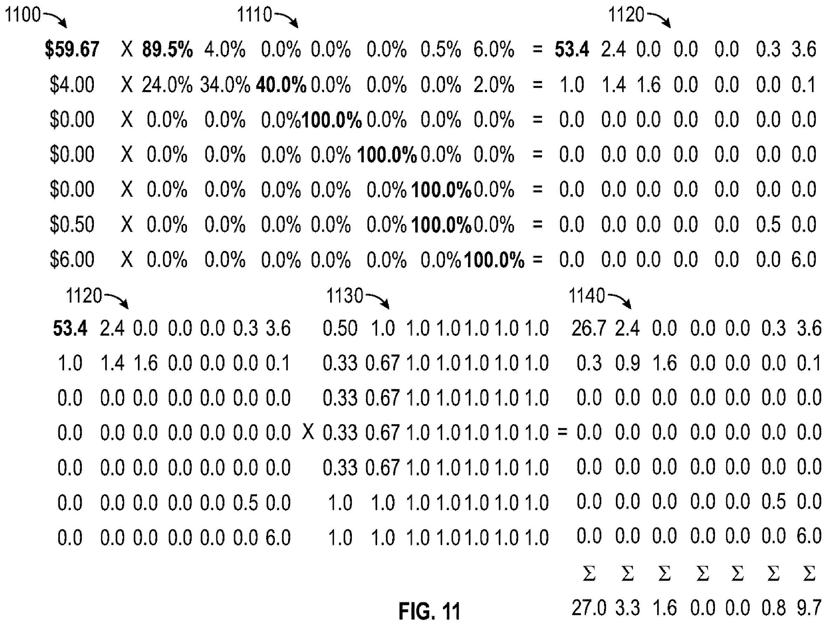

FIG. 10 shows an example of how the amortization matrix 1000 is used in an example embodiment. In this regard, the balance matrix 900 is multiplied by the amortization matrix 1000 to generate a matrix of probability-weighted amounts 1010 for each transition after payments are accounted for at t=1. The matrix of probability-weighted amounts 1010 may then be column-wise summed to provide a summation output 1020. The summation output 1020 shows a probability-weighted balance of $59.70 in the "current" state and $4.00 in the "dq 1-30" state at t=1. The summation output 1020 may be used as a probability-weighted principal distribution vector 1100 (which is essentially an updated probability-weighted principal balance vector) as shown in FIG. 11 for conducting a second iteration at t=2.

In this regard, FIG. 11 shows the probability-weighted principal distribution vector 1100 being multiplied by the t=1 transition matrix 1110 to obtain an updated balance matrix 1120. The updated balance matrix 1120 is then multiplied by updated amortization matrix 1130 to generate a matrix of probability-weighted amounts 1140 for each transition after payments are accounted for at t=2. The process described above can then be repeated for additional iterations (i.e., t=3, t=4, t=5 ... t=n) until all of the principal has either been received via payments made, as captured by the amortization matrix, or until all of the principal has accumulated into charged off or paid off states (i.e., the terminal states). For interest bearing loans, the only change to the examples above is that additional logic is provided by the balance converter 740 for computing how much interest is collected each month. The cash flow module 70 therefore enables computation of many values or amounts that may be of interest at any point during the life of the loan. For example, total loss and total cash flow can be determined by the cash flow module 70. The total loss may be the amount expected to be lost on a loan based on the probability-weighted balance left in the charged off state. The total cash flow may be the probability-weighted balance left in the paid off state, plus the sum of all monthly principal and interest payments made over the lifetime of the loan. Since the process described above is iterative, values may not only be determined by the cash flow module 70 for the end of the loan, but can also be determined for every intermediate time-step (e.g., every repayment cycle, which could be weekly, biweekly, monthly, bimonthly, etc.) to observe how values are expected to change each repayment cycle (e.g., month-over-month). Notably, the amortization matrices may be recalculated in order to ensure accurate modeling that does not reach a situation of negative principal balances.

In an example embodiment, the cash flow module 70 may further include an aggregator 760. The aggregator 760 may be configured to sum all individually calculated outputs for respective loans into a single output that represents all loans for a selected group of loans. The aggregator 760 may therefore enable the cash flow module 70 to operate at large scales and, in some cases, may include distributed computing assets to support the relatively large computing requirements that may be associated with operation of the loan transition model platform 50 on large numbers of loans.

Unlike conventional modeling tools, which as noted above employ historical data that is lumped together, the repayment module 60 and the cash flow module 70 are each configured to operate on individual loans, which could be either real loans or hypothetical loans. Thus, even when analyzing a set of loans, or loans that are associated with a particular product offering, the loan transition model platform 50 handles each loan individually. As such, contextual features associated with each loan make each individual loan potentially unique, and the operation of the loan transition model platform 50 at the level of the individual loans that make up any group of loans being analyzed provides a level of granularity and accuracy that is not achievable via conventional means. Moreover, the ability to model for hypothetical loans enables estimations and simulations to be run with respect to potential future offerings or products to better estimate or simulate loan sensitivities with respect to changes in loan offerings. Existing or hypothetical loans could also have one or more contextual input variables changed to determine how such changes would impact loan repayment and cash flow into the future if such changes were implemented.

Thus, in some cases, the loan transition model platform 50 may be embodied as apparatus for modeling loan transitions, which may include processing circuitry configured to employ a repayment model to predict state transition probabilities for a given loan at a given age, where the state transition probabilities represent a probability of transitioning from a present state to a next state among a plurality of potential repayment states of the given loan between origination and a terminal state. The processing circuitry may be further configured to compute cash flow based on the predicted state transition probabilities at any of a plurality of time steps in the future for the given loan. In some cases, the repayment model may be a gradient boosted decision tree trained to minimize multi-class log loss where each class represents one of the potential repayment states. In an example embodiment, the processing circuitry may be further configured to apply the repayment model to a plurality of selected loans on an individual basis and aggregate results for the plurality of selected loans. In some cases, the processing circuitry may be further configured to model amortization of the loan and interest for each of the time steps to compute the cash flow. The repayment model may operate on input features that include covariate features that describe loan states at each time step that are common between the given loan and other loans, and contextual features that describe aspects specific to the given loan (e.g., credit score, term, and loan amount).

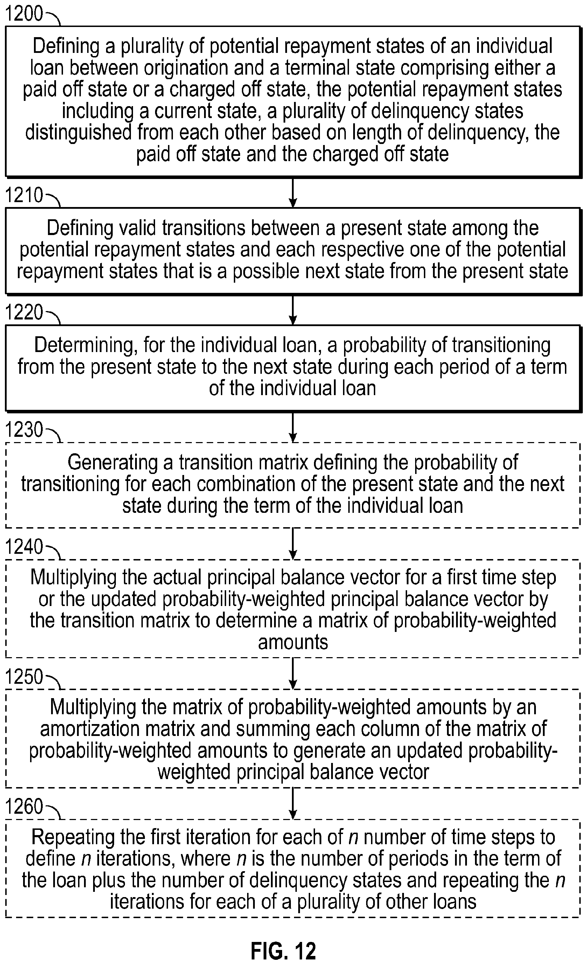

From a technical perspective, the loan transition model platform 50 described above may be used to support some or all of the operations described above. As such, the apparatuses described in FIGS. 2 and 7 may be used to facilitate the implementation of several computer program and/or network communication based interactions. As an example, FIG. 12 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of modeling repayment behavior and cash flow in connection with financial transactions according to one embodiment of the invention is shown in FIG. 12. The method may include defining a plurality of potential repayment states of an individual loan between origination and a terminal state comprising either a paid off state or a charged off state at operation 1200. In this context, the potential repayment states include a current state, a plurality of delinquency states distinguished from each other based on length of delinquency, the paid off state and the charged off state. The method may further include defining valid transitions between a present state among the potential repayment states and each respective one of the potential repayment states that is a possible next state from the present state at operation 1210, and determining, for the individual loan, a probability of transitioning from the present state to the next state during each period of a term of the individual loan at operation 1220.

In an example embodiment, an apparatus for performing the method of FIG. 12 above may comprise a processor (e.g., the processor 102) or processing circuitry configured to perform some or each of the operations (1200-1220) described above. The processor may, for example, be configured to perform the operations (1200-1220) by performing hardware implemented logical functions, executing stored instructions, or executing algorithms for performing each of the operations. In some embodiments, the processor or processing circuitry may be further configured for additional operations or optional modifications to operations 1200 to 1220.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may further include generating a transition matrix defining the probability of transitioning for each combination of the present state and the next state for each period of the individual loan as shown by operation 1230. In an example embodiment, the method may further include generating a probability-weighted principal balance vector. The method may further include multiplying the actual principal balance vector for a first time step or the updated probability-weighted principal balance vector by the transition matrix to determine a matrix of probability-weighted amounts at operation 1240. Notably, at this stage, an interest matrix could also be applied in a similar fashion if interest is applied to the loan. In an example embodiment, the method may further include multiplying the matrix of probability-weighted amounts by an amortization matrix and summing each column of the matrix of probability-weighted amounts to generate an updated probability-weighted principal balance vector, at operation 1250. In some cases, generating the transition matrix, generating the probability-weighted principal balance vector, multiplying the probability-weighted principal balance vector by the transition matrix, multiplying the matrix of probability-weighted amounts by the amortization matrix, and summing each column are each executed for respective periods of the loan to define respective iterations. In other words, operations 1230-1250 may be iterated after operations 1200 to 1220 have initially been performed. Thereafter, as shown by operation 1260. the iterations may be repeated for $n$ number of time steps to define $n$ iterations, where $n$ is the number of periods in the term of the loan plus the number of delinquency states. In some cases, an accounting may be made for interest payments and principal payments, and such payments may be recorded, after each time step. In the case of interest, for example, the model may account for multiple periods of interest in case multiple payments have been made to reach the current state from a delinquency state. A repeat of the first and $n$ iterations may then also be conducted for each of a plurality of other loans to define data that applies to a selected set of loans.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

**Claims**

1. A method for modeling loan transitions comprising:

   defining a plurality of potential repayment states of an individual loan between origination and a terminal state comprising either a paid off state or a charged off state, the potential repayment states including a current state, a plurality of delinquency states distinguished from each other based on length of delinquency, the paid off state and the charged off state;
   defining valid transitions between a present state among the potential repayment states and each respective one of the potential repayment states that is a possible next state from the present state; and
   determining, for the individual loan, a probability of transitioning from the present state to the next state during each period of a term of the individual loan.

2. The method of claim 1, further comprising generating a transition matrix defining the probability of transitioning for each combination of the present state and the next state during each period of the individual loan.

3. The method of claim 2, further comprising generating a probability-weighted principal balance vector.

4. The method of claim 3, further comprising multiplying the probability-weighted principal balance vector by the transition matrix to determine a matrix of probability-weighted amounts.

5. The method of claim 4, further comprising multiplying the matrix of probability-weighted amounts by an amortization matrix and summing each column of the matrix of probability-weighted amounts to generate an updated probability-weighted principal balance vector,
   wherein generating the transition matrix, generating the probability-weighted principal balance vector, multiplying the probability-weighted principal balance vector by the transition matrix, multiplying the matrix of probability-weighted amounts by the amortization matrix, and summing each column are each executed for respective periods of the loan to define respective iterations.

6. The method of claim 5, further comprising accounting for interest and principal payments between each of the iterations.

7. The method of claim 5, further comprising repeating the iterations for each of $n$ number of time steps to define $n$ iterations, where $n$ is the number of periods in the term of the loan plus a number of the delinquency states.

8. The method of claim 7, further comprising repeating the $n$ iterations for each of a plurality of other loans.

9. An apparatus for modeling loan transitions, the apparatus comprising a repayment module, the repayment module defining a plurality of potential repayment states of an individual loan between origination and a terminal state comprising either a paid off state or a charged off state, the potential repayment states including a current state, a plurality of delinquency states distinguished from each other based on length of delinquency, the paid off state and the charged off state,
   wherein the repayment module further defines valid transitions between a present state among the potential repayment states and each respective one of the potential repayment states that is a possible next state from the present state, and determines, for the individual loan, a probability of transitioning from the present state to the next state during each period of a term of the individual loan.

10. The apparatus of claim 9, wherein the repayment module is further configured to generate a transition matrix defining the probability of transitioning for each combination of the present state and the next state during each period of the individual loan.

11. The apparatus of claim 10, wherein the repayment module is further configured to generate a probability-weighted principal balance vector.

12. The apparatus of claim 11, further comprising a cash flow module configured to multiply the probability-weighted principal balance vector by the transition matrix to determine a matrix of probability-weighted amounts.

13. The apparatus of claim 12, wherein the cash flow module is further configured to multiply the matrix of probability-weighted amounts by an amortization matrix and sum each column of the matrix of probability-weighted amounts to generate an updated probability-weighted principal balance vector,
wherein generating the transition matrix, generating the probability-weighted principal balance vector, multiplying the probability-weighted principal balance vector by the transition matrix, multiplying the matrix of probability-weighted amounts by the amortization matrix, and summing each column are each executed for respective periods of the loan to define respective iterations.

14. The apparatus of claim 13, wherein the repayment module and the cash flow module are configured to repeat the first iteration for each of $n$ number of time steps to define $n$ iterations, where $n$ is the number of periods in the term of the loan plus a number of the delinquency states.

15. The apparatus of claim 14, wherein the repayment module and the cash flow module are configured to repeat the $n$ iterations for each of a plurality of other loans.

**FIG. 1**

**FIG. 2**

**FIG. 3**

**FIG. 4**

EP 4 109 377 A1

500

|  | 511 current | 512 dq 1-30 | 513 dq 31-60 | 514 dq 61-90 | 515 dq 91-120 | 516 charged off | 517 paid off |
|---|---|---|---|---|---|---|---|
| 501 current | **89.5%** | 4.0% | 0.0% | 0.0% | 0.0% | 0.5% | 6.0% |
| 502 dq 1-30 | 24.0% | 34.0% | 40.0% | 0.0% | 0.0% | 0.0% | 2.0% |
| 503 dq 1-60 | 10.0% | 12.0% | 16.0% | **60.0%** | 0.0% | 1.0% | 1.0% |
| 504 dq 61-90 | 5.0% | 2.0% | 4.0% | 7.0% | **80.0%** | 1.0% | 1.0% |
| 505 dq 91-120 | 2.0% | 0.5% | 0.2% | 0.3% | 3.0% | **93.0%** | 1.0% |
| 506 charged off | 0.0% | 0.0% | 0.0% | 0.0% | 0.0% | **100.0%** | 0.0% |
| 507 paid off | 0.0% | 0.0% | 0.0% | 0.0% | 0.0% | 0.0% | **100.0%** |

FIG. 5

600

| Loan ID | | | Features | | | | | Labels | | | | | | |
| --- | --- | --- | --- | --- | --- | --- | --- | --- | --- | --- | --- | --- | --- | --- |
| | Contest | Age | Current State | | | | | Next State | | | | | | |
| | | | cur | dq1 | dq31 | dq61 | dq91 | cur | dq1 | dq31 | dq61 | dq91 | co | po |
| | <f1, f2, ... fn> | 0 | 1 | 0 | 0 | 0 | 0 | 0 | 1 | 0 | 0 | 0 | 0 | 0 |
| | <f1, f2, ... fn> | 1 | 0 | 1 | 0 | 0 | 0 | 0 | 0 | 1 | 0 | 0 | 0 | 0 |
| 21XXX | <f1, f2, ... fn> | 2 | 0 | 0 | 1 | 0 | 0 | 0 | 0 | 0 | 1 | 0 | 0 | 0 |
| | <f1, f2, ... fn> | 3 | 0 | 0 | 0 | 1 | 0 | 1 | 0 | 0 | 0 | 0 | 0 | 0 |
| | <f1, f2, ... fn> | 4 | 1 | 0 | 0 | 0 | 0 | 1 | 0 | 0 | 0 | 0 | 0 | 0 |
| | <f1, f2, ... fn> | 5 | 1 | 0 | 0 | 0 | 0 | 0 | 0 | 0 | 0 | 0 | 0 | 1 |

FIG. 6

FIG. 7

EP 4 109 377 A1

| Current loan state | cur | dq1 | dq31 | dq61 | dq91 | co | po |
|---|---|---|---|---|---|---|---|
| Probability-weighted principal balance | **$100.00** | $0.00 | $0.00 | $0.00 | $0.00 | $0.00 | $0.00 |

**FIG. 8**

| | | cur | dq1 | dq31 | dq61 | dq91 | co | po | | | | | | | | |
|---|---|---|---|---|---|---|---|---|---|---|---|---|---|---|---|---|
| **$100.00** | x | **89.5%** | 4.0% | 0.0% | 0.0% | 0.0% | 0.5% | 6.0% | = | **89.5** | 4.0 | 0.0 | 0.0 | 0.0 | 0.5 | 6.0 |
| $0.00 | x | 0.0% | 0.0% | **100.0%** | 0.0% | 0.0% | 0.0% | 0.0% | = | 0.0 | 0.0 | 0.0 | 0.0 | 0.0 | 0.0 | 0.0 |
| $0.00 | x | 0.0% | 0.0% | 0.0% | **100.0%** | 0.0% | 0.0% | 0.0% | = | 0.0 | 0.0 | 0.0 | 0.0 | 0.0 | 0.0 | 0.0 |
| $0.00 | x | 0.0% | 0.0% | 0.0% | 0.0% | **100.0%** | 0.0% | 0.0% | = | 0.0 | 0.0 | 0.0 | 0.0 | 0.0 | 0.0 | 0.0 |
| $0.00 | x | 0.0% | 0.0% | 0.0% | 0.0% | 0.0% | **100.0%** | 0.0% | = | 0.0 | 0.0 | 0.0 | 0.0 | 0.0 | 0.0 | 0.0 |
| $0.00 | x | 0.0% | 0.0% | 0.0% | 0.0% | 0.0% | **100.0%** | 0.0% | = | 0.0 | 0.0 | 0.0 | 0.0 | 0.0 | 0.0 | 0.0 |
| $0.00 | x | 0.0% | 0.0% | 0.0% | 0.0% | 0.0% | 0.0% | **100.0%** | = | 0.0 | 0.0 | 0.0 | 0.0 | 0.0 | 0.0 | 0.0 |

**FIG. 9**

EP 4 109 377 A1

900

1000

1010

| **89.5** | 4.0 | 0.0 | 0.0 | 0.0 | 0.5 | 6.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |

X

| 0.67 | 1.0 | 1.0 | 1.0 | 1.0 | 1.0 | 1.0 |
| 0.67 | 1.0 | 1.0 | 1.0 | 1.0 | 1.0 | 1.0 |
| 0.67 | 1.0 | 1.0 | 1.0 | 1.0 | 1.0 | 1.0 |
| 0.67 | 1.0 | 1.0 | 1.0 | 1.0 | 1.0 | 1.0 |
| 0.67 | 1.0 | 1.0 | 1.0 | 1.0 | 1.0 | 1.0 |
| 1.0 | 1.0 | 1.0 | 1.0 | 1.0 | 1.0 | 1.0 |
| 1.0 | 1.0 | 1.0 | 1.0 | 1.0 | 1.0 | 1.0 |

=

| **59.7** | 4.0 | 0.0 | 0.0 | 0.0 | 0.5 | 6.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |
| 0.0 | 4.0 | 0.0 | 0.0 | 0.0 | 0.0 | 6.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |
| 0.0 | 0.0 | 0.0 | 0.0 | 0.0 | 0.0 | 0.0 |

$\Sigma$ $\Sigma$ $\Sigma$ $\Sigma$ $\Sigma$ $\Sigma$ $\Sigma$

**59.7** 4.0 0.0 0.0 0.0 0.5 6.0

**FIG. 10**

EP 4 109 377 A1

1100⬎     1110⬎     1120⬎

$59.67   X   **89.5%** 4.0% 0.0% 0.0% 0.0% 0.5% 6.0%   =   **53.4** 2.4 0.0 0.0 0.0 0.3 3.6

$4.00   X   24.0% 34.0% **40.0%** 0.0% 0.0% 0.0% 2.0%   =   1.0 1.4 1.6 0.0 0.0 0.0 0.1

$0.00   X   0.0% 0.0% 0.0% **100.0%** 0.0% 0.0% 0.0%   =   0.0 0.0 0.0 0.0 0.0 0.0 0.0

$0.00   X   0.0% 0.0% 0.0% 0.0% **100.0%** 0.0% 0.0%   =   0.0 0.0 0.0 0.0 0.0 0.0 0.0

$0.00   X   0.0% 0.0% 0.0% 0.0% 0.0% **100.0%** 0.0%   =   0.0 0.0 0.0 0.0 0.0 0.0 0.0

$0.50   X   0.0% 0.0% 0.0% 0.0% 0.0% **100.0%** 0.0%   =   0.0 0.0 0.0 0.0 0.0 0.5 0.0

$6.00   X   0.0% 0.0% 0.0% 0.0% 0.0% 0.0% **100.0%** =   0.0 0.0 0.0 0.0 0.0 0.0 6.0

1120⬎     1130⬎     1140⬎

**53.4** 2.4 0.0 0.0 0.0 0.3 3.6    0.50 1.0 1.0 1.0 1.0 1.0 1.0    26.7 2.4 0.0 0.0 0.0 0.3 3.6

1.0 1.4 1.6 0.0 0.0 0.0 0.1    0.33 0.67 1.0 1.0 1.0 1.0 1.0    0.3 0.9 1.6 0.0 0.0 0.0 0.1

0.0 0.0 0.0 0.0 0.0 0.0 0.0    0.33 0.67 1.0 1.0 1.0 1.0 1.0    0.0 0.0 0.0 0.0 0.0 0.0 0.0

0.0 0.0 0.0 0.0 0.0 0.0 0.0   X   0.33 0.67 1.0 1.0 1.0 1.0 1.0   =   0.0 0.0 0.0 0.0 0.0 0.0 0.0

0.0 0.0 0.0 0.0 0.0 0.0 0.0    0.33 0.67 1.0 1.0 1.0 1.0 1.0    0.0 0.0 0.0 0.0 0.0 0.0 0.0

0.0 0.0 0.0 0.0 0.0 0.5 0.0    1.0 1.0 1.0 1.0 1.0 1.0 1.0    0.0 0.0 0.0 0.0 0.0 0.5 0.0

0.0 0.0 0.0 0.0 0.0 0.0 6.0    1.0 1.0 1.0 1.0 1.0 1.0 1.0    0.0 0.0 0.0 0.0 0.0 0.0 6.0

$$\Sigma \quad \Sigma \quad \Sigma \quad \Sigma \quad \Sigma \quad \Sigma \quad \Sigma$$

27.0 3.3 1.6 0.0 0.0 0.8 9.7

**FIG. 11**

1200

Defining a plurality of potential repayment states of an individual loan between origination and a terminal state comprising either a paid off state or a charged off state, the potential repayment states including a current state, a plurality of delinquency states distinguished from each other based on length of delinquency, the paid off state and the charged off state

1210

Defining valid transitions between a present state among the potential repayment states and each respective one of the potential repayment states that is a possible next state from the present state

1220

Determining, for the individual loan, a probability of transitioning from the present state to the next state during each period of a term of the individual loan

1230

Generating a transition matrix defining the probability of transitioning for each combination of the present state and the next state during the term of the individual loan

1240

Multiplying the actual principal balance vector for a first time step or the updated probability-weighted principal balance vector by the transition matrix to determine a matrix of probability-weighted amounts

1250

Multiplying the matrix of probability-weighted amounts by an amortization matrix and summing each column of the matrix of probability-weighted amounts to generate an updated probability-weighted principal balance vector

1260

Repeating the first iteration for each of $n$ number of time steps to define $n$ iterations, where $n$ is the number of periods in the term of the loan plus the number of delinquency states and repeating the $n$ iterations for each of a plurality of other loans

FIG. 12

Europäisches
Patentamt
European
Patent Office
Office européen
des brevets

# EUROPEAN SEARCH REPORT

Application Number

EP 22 18 0436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 210 332 A (BEIJING QIYU INFORMATION TECH CO LTD) 29 May 2020 (2020-05-29) <br> * figure 1 * <br> * paragraphs [0001], [0006] – [0008], [0047] – [0130] * <br> ----- | 1-15 | INV. <br> G06Q40/02 <br> G06Q40/06 |
| X | CN 111 145 009 A (BEIJING QIYU INFORMATION TECH CO LTD) 12 May 2020 (2020-05-12) <br> * figure 1 * <br> * paragraphs [0001], [0007] – [0009], [0048] – [0126] * <br> ----- | 1-15 | |

TECHNICAL FIELDS
SEARCHED       (IPC)

G06Q

The present search report has been drawn up for all claims

| Place of search | Date of completion of the search | Examiner |
|---|---|---|
| The Hague | 4 November 2022 | Meijs, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 0436

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2022

| Patent document cited in search report | | Publication date | Patent family member(s) | Publication date |
|---|---|---|---|---|
| CN 111210332 | A | 29-05-2020 | NONE | |
| CN 111145009 | A | 12-05-2020 | NONE | |

EPO FORM P0459

For more details about this annex : see Official Journal of the European Patent Office, No. 12/82